# EUROPÄISCHE PATENTSCHRIFT

(11) **EP 2 184 507 B1**
(45) Veröffentlichungstag und Bekanntmachung des Hinweises auf die Patenterteilung: **24.08.2011**
(21) Anmeldenummer: 09172976.4
(22) Anmeldetag: 14.10.2009
(51) Int. Cl.: F16D 66/02, F16D 48/06

(54) **Verfahren und Anordnung zum Bestimmen des Verschleißzustandes einer Schaltkupplung**
Method and device for determining the wear state of a switch coupling
Procédé et agencement de détermination de l'état d'usure d'un embrayage de commutation

(30) Priorität: 05.11.2008 DE 102008043492
(43) Veröffentlichungstag der Anmeldung: 12.05.2010
(73) Patentinhaber: ZF Friedrichshafen AG, 88038 Friedrichshafen (DE)
(72) Erfinder: Bitzer, Franz, 88048, Friedrichshafen (DE)

(56) Entgegenhaltungen:
- DE-A1- 3 043 348
- DE-A1- 19 510 905
- DE-A1-102007 026 770
- DE-A1-102007 044 037
- FR-A- 2 854 216
- JP-A- 2007 040 452

## Beschreibung

Die Erfindung betrifft ein Verfahren und eine Anordnung zum Bestimmen des Verschleißzustandes einer Schaltkupplung eines Kraftfahrzeuges, welche zum Unterbrechen des Kraftflusses bzw. Drehzahlangleich zwischen einer Abtriebswelle einer Brennkraftmaschine und einem Triebstrang des Kraftfahrzeuges vorgesehen ist.

Bei Kraftfahrzeugen ist üblicherweise zwischen einer Abtriebswelle der Brennkraftmaschine und dem Triebstrang eine Kupplung vorgesehen, um den von der Brennkraftmaschine kommenden Kraftfluss beim Anfahrvorgang ruckfrei aufzubauen bzw. zu unterbrechen. Bei einem Kraftfahrzeug mit Handschaltgetriebe wird hierbei eine sehr schnelle und vollständige Unterbrechung des Kraftflusses bei möglichst kleinen Massenträgheitsmomenten für das Schalten gefordert. Diese Anforderungen werden durch eine schaltbare, trockene Reibungskupplung erfüllt, welche aus einer mit der Abtriebswelle der Brennkraftmaschine verbundenen Membranfederdruckplatte, einer auf der Eingangswelle des nachgeschalteten Getriebes axial verschiebbaren Kupplungsscheibe und einem Ausrücker besteht, der über ein Ausrücklager den Ausrückweg von den nicht mit rotierenden Betätigungselementen der Schaltkupplung auf die Druckplatte überträgt. Im nicht betätigten Zustand der Schaltkupplung wird die Druckplatte über die Membranfeder an die Kupplungsscheibe angedrückt, wodurch zwischen den beiden Scheiben eine kraftschlüssige Verbindung hergestellt wird und somit beide Elemente mit gleicher Drehzahl rotieren. Bei einer Betätigung der Schaltkupplung wird mittels des Ausrückers auf das Ausrücklager eingewirkt und die Membranfeder in Richtung der Druckplatte gedrückt. Dadurch wird die Druckplatte von der Membranfeder entlastet, was in einem Öffnen der Schaltkupplung resultiert. Zwischen den Positionen der vollständig geöffneten und vollständig geschlossenen Kupplung wird die Drehzahl von der einen Kupplungsseite auf die andere Kupplungsseite entsprechend der Anpresskraft der Membranfeder an die Druckplatte und dementsprechend der Druckplatte an die Kupplungsscheibe geregelt, die Schaltkupplung agiert also als Drehzahlwandler. Das Drehmoment wird in diesen Fällen unverändert durchgeleitet, wobei bei einer Wandelung der Drehzahl die Drehmomentübertragung unter Schlupf stattfindet, was zu einer Erwärmung der Kupplung und Belagverschleiß führt.

Wird ein übermäßiger Verschleiß der Kupplung nicht rechtzeitig erkannt, kann es zu einem Liegenbleiben des Kraftfahrzeuges kommen, da eine Übertragung des Kraftflusses von der Brennkraftmaschine auf den Triebstrang nicht mehr möglich ist. Aus diesem Grund werden im zunehmenden Maße Kupplungsverschleißanzeigen vorgesehen, durch welche der Verschleißzustand der Schaltkupplung überwacht werden kann. Somit ist es möglich, einen Verschleiß der Schaltkupplung frühzeitig zu erkennen und diese bei einem nächsten Werkstattaufenthalt des Kraftfahrzeuges auszutauschen.

Aus der DE 20 2005 021 024 U1 ist eine Schaltkupplung für den Antriebsstrang eines Kraftfahrzeuges bekannt, bei welcher signalabgebende oder signalerzeugende Elemente und ein Abtastelement vorgesehen sind, wobei der Verschleißzustand der Schaltkupplung mittels des Abstandes der durch das Abtastelement empfangenen Signale bestimmbar ist. Zu diesem Zweck ist eines der signalabgegebenen Elemente an der Druckplatte der Schaltkupplung angeordnet, während das jeweils andere Signalelement fest am Gehäuse der Kupplung platziert ist. Bei Betrieb des Antriebsstranges überstreichen beide Signalelemente das Abtastelement. Hierbei lässt der zeitliche Abstand der Signale einen Rückschluss auf die relative Lage der Druckplatte zum Gehäuse zu, wodurch der Verschleiß eingeschätzt werden kann.

Dem Fachmann sind zudem weitere Kupplungsverschleißerkennungen bekannt, bei welchen die Kupplungsbelastung berechnet wird und basierend auf diesen Belastungen daraus der Kupplungsbelagverschleiß geschätzt wird. Des Weiteren sind Verschleißerkennungen mittels der Kupplungsposition geläufig, welche den Zustand der Kupplung anhand eines Vergleichs der Zu-Position im Neuzustand der Kupplung zur aktuellen Zu-Position bestimmen.

Die vorgenannten Verfahren des Standes der Technik haben den Nachteil, dass der Kupplungsverschleiß nicht absolut bestimmt werden kann. Wird beispielsweise das Steuergerät ausgetauscht, so gehen die bereits ermittelten Werte bezüglich des Kupplungsverschleißes verloren, sofern sie nicht mit in das neu eingebaute Steuergerät übernommen wurden. Da der Prozess der Übernahme der bereits hinterlegten Werte des Kupplungsverschleißes in ein neues Steuergerät in der Praxis nur sehr schwer kontrollierbar ist, kann es beim weiteren Betrieb des jeweiligen Kraftfahrzeuges zu falschen Verschleißberechnungen und somit zu einem grundlosen Tauschen der Schaltkupplung oder zu einem Liegenbleiben des Fahrzeuges aufgrund einer nicht rechtzeitig getauschten Schaltkupplung kommen.

Aus der FR-A-2854216 ist ein stand der Technik gemäß Oberbegriff des Anspruchs 1 bzw. 9 bekannt.

Es ist daher die Aufgabe der vorliegenden Erfindung, ein Verfahren und eine Vorrichtung zum Bestimmen des Verschleißzustandes einer Schaltkupplung eines Kraftfahrzeuges zur Verfügung zu stellen, welche genauer eine absolute Ermittlung des Verschleißes der Schaltkupplung ermöglichen.

Diese Aufgabe wird aus verfahrenstechnischer Sicht ausgehend vom Oberbegriff des Anspruchs 1 in Verbindung mit dessen kennzeichnenden Merkmalen gelöst. Aus vorrichtungstechnischer Sicht findet eine Lösung der Aufgabe ausgehend von Oberbegriff des nebengeordneten Anspruchs 9 in Verbindung mit dessen kennzeichnenden Merkmalen statt. Die darauffolgenden, abhängigen Ansprüche geben jeweils vorteilhafte Weiterbildungen der Erfindung wieder.

Die Erfindung umfasst die technische Lehre, dass der Verschleißzustand der Schaltkupplung mittels der Parameter Kupplungsausrückweg und Ausrückkraft an einem Ausrücklager der Schaltkupplung ermittelt wird, wobei hierzu eine Differenz der Kupplungsausrückwege bei einem ersten Anstieg der Ausrückkraft und einem durch einen zweiten Anstieg der Ausrückkraft bei einer Kupplungsbetätigung dargestellten Referenzpunkt gemessen wird. Hierbei ist zum Erfassen der Parameter im Bereich des Ausrücklagers mindestens ein Sensor vorgesehen, der im weiteren Verlauf mit einer Einrichtung zum Auswerten der von ihm erfassten Parameter in Verbindung steht. Bei einer neuwertigen Schaltkupplung weist die Differenz der Kupplungsausrückwege bei einem ersten Anstieg der Ausrückkraft und dem den Referenzpunkt darstellenden zweiten Anstieg einen bestimmten Wert auf, welcher sich mit zunehmendem Verschleiß stetig vergrößert. Da sowohl der Kupplungsausrückweg bei einem ersten Anstieg der Ausrückkraft als auch der Ausrückweg bei dem zweiten Anstieg durch Sensoren, welche die Parameter Kupplungsausrückweg und Ausrückkraft am Ausrücklager erfassen, stetig neu erfasst werden kann, kann dementsprechend jederzeit der Verschleiß der Schaltkupplung absolut ermittelt werden. Folglich bleiben auch ein Austausch des Steuergeräts oder Ungenauigkeiten bezüglich der Einbauposition der Schaltkupplung ohne Bedeutung. Des Weiteren kann auf zusätzliche Signal- oder Abtastelemente im Bereich der Kupplungsscheibe oder Druckplatte verzichtet werden.

In Weiterbildung der Erfindung wird bei Fehlen des Referenzwertes und/oder nach einer definierten Zeitdauer eine Messung und anschließende Speicherung des aktuellen Referenzwertes eingeleitet. Dadurch braucht eine Messung des Referenzwertes nicht bei jedem Bestimmen des Verschleißzustandes der Schaltkupplung durchgeführt werden, wodurch die durch die Auswerteinheit zu verarbeitende Datenmenge klein gehalten werden kann. Bei Fehlen des Referenzwertes aufgrund eines Tauschs der Auswerteeinheit oder zum Abgleichen des in der Auswerteeinheit hinterlegten Referenzwertes kann hingegen in definierten Zeitabständen oder in bestimmten Situationen eine Neumessung durchgeführt werden. Durch zeitliche Intervalle zur Bestimmung des Referenzwertes können folglich auch Kalibrierungsfehler der Weg- und Kraftsensoren ausgeglichen werden.

Entsprechend einer Ausführungsform der Erfindung wird die Messung des Verschleißzustandes beim Starten der Brennkraftmaschine und einer ersten Betätigung der Schaltkupplung durchgeführt. Dies hat den Vorteil, dass somit bei Inbetriebnahme des Kraftfahrzeuges eine Zustandsprüfung der Schaltkupplung durchgeführt wird und folglich ein möglicher Ausfall der Schaltkupplung aufgrund eines zu großen Verschleißes vor Fahrtantritt festgestellt werden kann.

In Weiterbildung der Erfindung wird ab Überschreiten mindestens einer definierten Grenze für die Differenz eine Wammeldung an einen Fahrzeugführer ausgegeben. Dadurch wird der Fahrzeugführer über das Überschreiten dieser definierten Warnschwelle informiert und kann sich dementsprechend auf die Situation einstellen und das Anfahren einer Werkstatt einplanen.

Gemäß einer weiteren, vorteilhaften Ausführungsform der Erfindung wird ab Überschreiten einer ersten Grenze eine Warnmeldung mittlerer Dringlichkeit an den Fahrzeugführer ausgegeben, während bei Überschreiten einer zweiten Grenze eine Warnmeldung hoher Dringüchkeit erzeugt wird. Durch eine derartige Abstufung der Dringlichkeiten kann der Fahrzeugführer schon sehr früh auf den Verschleißzustand der Schaltkupplung aufmerksam gemacht werden, wodurch ein Austausch der Kupplung bei der nächsten Inspektion des Kraftfahrzeuges in der Werkstatt mit eingeplant werden kann.

In Weiterbildung der Erfindung wird die Ausrückkraft am Ausrücklager mit einem Druck- und/oder Kraftsensor ermittelt. Dadurch kann der Parameter der Ausrückkraft auf zuverlässige Art und Weise bestimmt werden. Zudem kann unter Umständen ein bereits vorhandener Sensor im Bereich der Schaltkupplung Anwendung finden.

Entsprechend einer weiteren Ausführungsform der Erfindung kann die Ausrückkraft auch berechnet werden. Hierzu kann beispielsweise ein in einem Steuergerät des Kraftfahrzeugs bekanntes Ventilansteuersignal verwendet werden. Über das Ventilansteuersignal wird ein entsprechendes Ventil zur Betätigung einer hydraulischen oder pneumatischen Ausrückeinrichtung angesteuert, wobei in Abhängigkeit der Dauer der Ventilansteuerung und unter Berücksichtigung von gegebenen physikalischen Randbedingungen, wie beispielsweise Kolbendurchmesser, Ventilquerschnitt, Volumenstrom bzw. -dichte, unter- bzw. überkritisches Druckverhältnis, Versorgungsdruck und Umgebungsdruck, basierend auf den bekannten physikalischen Zusammenhängen die Kupplungsausrückkraft berechnet werden kann.

Entsprechend einer vorteilhaften Ausführungsform der Erfindung wird die Ausrückkraft über die Messung eines Druckes einer hydraulischen oder pneumatischen Ausrückeinrichtung gemessen. Durch diese Maßnahme kann das erfindungsgemäße Verfahren auch bei Schaltkupplungen mit hydraulischen oder pneumatischen Ausrückeinrichtungen Verwendung finden. Dem Fachmann wird allerdings klar sein, dass auch weitere Arten zur Ermittlung der Ausrückkraft je nach Aufbau der Ausrückeinrichtung darstellbar sind.

Vorteilhafterweise ist die Einrichtung zum Auswerten der erfassten Parameter nach Art eines Steuergeräts ausgebildet. Dementsprechend kann eine Auswertung der erfassten Parameter und somit eine Bestimmung des Verschleißzustandes der Schaltkupplung zentral in einem Steuergerät des Kraftfahrzeuges erfolgen und folglich auch von zentraler Stelle aus je nach ermittelten Zustand eine entsprechende Reaktion eingeleitet werden.

Weitere, die Erfindung verbessernden Maßnahmen werden nachstehend gemeinsam mit der Beschreibung eines bevorzugten Ausführungsbeispiels der Erfindung anhand der Figuren näher dargestellt.

Es zeigt:
- Figur 1: eine stark schematische Ansicht eines Kraftfahrzeuges, mit einer Schaltkupplung, bei weicher die erfindungsgemäße Anordnung und das erfindungsgemäße Verfahren Anwendung finden; und
- Figur 2: ein Diagramm mit Verläufen I und II einer Ausrückkraft, welche jeweils über dem Ausrückweg einer Schaltkupplung aufgetragen sind.

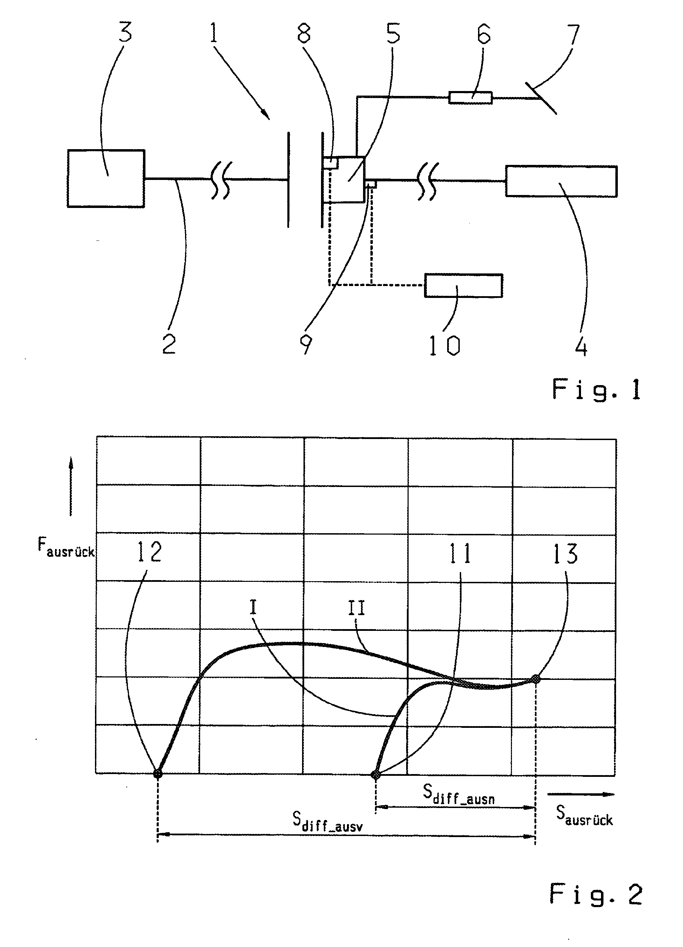

In Figur 1 ist eine schematische Ansicht eines Kraftfahrzeuges dargestellt, bei welchem eine Schaltkupplung 1 mit dem erfindungsgemäßen Verfahren und der erfindungsgemäßen Anordnung zum Bestimmen des Verschleißzustandes vorgesehen ist. Diese Schaltkupplung 1 ist auf ihrer einen Seite mit einer Abtriebswelle 2 einer Brennkraftmaschine 3 verbunden, während ihre andere Hälfte fest mit einem Triebstrang 4, welcher Getriebe, Differenzial, etc. umfasst, in Verbindung steht. Hierbei findet entsprechend des Öffnungszustandes der Schaltkupplung 1 ein Kraftfluss von der Brennkraftmaschine 3 auf den Triebstrang 4 bzw. umgekehrt statt. Zum Betätigen der Schaltkupplung 1 steht diese über ein Ausrücklager 5 und eine Verstärkungseinheit 6 mit einem Kupplungspedal 7 in Wirkverbindung, entsprechend dessen Betätigung eine - hier nicht weiter ersichtliche - Öffnungsbewegung der Schaltkupplung 1 einleitbar ist. Um im Bereich des Ausrücklagers 5 die Parameter Kupplungsausrückweg S_{ausrück} und die Ausrückkraft F_{ausrück} zu ermitteln, sind ein Kraftsensor 8 sowie ein Wegsensor 9 vorgesehen. Diese beiden Sensoren 8 und 9 sind mit einem Steuergerät 10 des Kraftfahrzeuges verbunden, in welchem anhand der Parameter des Kraftsensors 8 und des Wegsensors 9 der Verschleißzustand der Schaltkupplung 1 bestimmt wird.

In Figur 2 sind zwei Verläufe I und II des Parameters Ausrückraft F_{ausrück} am Ausrücklager 5 über dem Parameter Kupplungsausrückweg S_{ausrück} dargestellt. Hierbei ist Kurve I der Verlauf der Ausrückkraft einer neuwertigen Kupplung, während Kurve II die Ausrückkraft einer bereits verschlissenen Kupplung darstellt. Beide Kurven I und II weisen einen ersten Anstieg der Ausrückkraft F_{ausrück}, dargestellt durch die Punkte 11 und 12, und verfügen über einen gemeinsamen zweiten Anstieg, welcher den Referenzpunkt 13 bildet. Der Verschleißzustand der Schaltkupplung 1 wird nun ermittelt, indem die Differenz der Kupplungsausrückwege S_{ausrück} bei dem jeweils ersten Anstieg der Ausrückkraft F_{ausrück}, Punkt 11 oder 12, und dem Referenzpunkt 13 gebildet wird. Für die Kurve II und damit eine stark verschlissene Kupplung ergibt sich die Wegdifferenz s_{diff_ausv}, die wesentlich größer ist als die Wegdifferenz s_{diff_ausn} der Kurve I. Auf diese Art und Weise kann also durch die sich entsprechend des Verschleißes ändernde Differenz auf den jeweiligen Zustand der Schaltkupplung 1 rückgeschlossen werden. Da zudem die Punkte des ersten Anstiegs der Ausrückkraft F_{ausrück} 11 oder 12 und der Referenzpunkt 13 jeweils durch die Sensoren 8 und 9 bei jeder Messung neu erfasst werden können, ist jederzeit eine Absolutmessung des Verschleißzustandes der Schaltkupplung 1 möglich. Ab einer definierten Größe der Differenz ist es zudem möglich, über das Steuergerät 10 eine Warnmeldung an den Fahrzeugführer über den Zustand der Schaltkupplung 1 auszugeben und diesen somit auf die Problematik hinzuweisen.

### Bezugszeichen

- 1: Schaltkupplung
- 2: Abtriebswelle
- 3: Brennkraftmaschine
- 4: Triebstrang
- 5: Ausrücklager
- 6: Verstärkungseinheit
- 7: Kupplungspedal
- 8: Kraftsensor
- 9: Wegsensor
- 10: Steuergerät
- 11: Erster Kraftanstieg Kupplung neu
- 12: Erster Kraftanstieg Kupplung verschlissen
- 13: Referenzpunkt

- I: Kurve Ausrückkraft, Schaltkupplung neu
- II: Kurve Ausrückkraft, Schaltkupplung verschlissen

- F_{ausrück}: Ausrückkraft am Ausrücklager
- S_{ausrück}: Kupplungsausrückweg am Ausrücklager
- S_{diff_ausv}: Wegdifferenz Schaltkupplung verschlissen
- S_{diff_ausn}: Ausrückwegdifferenz Schaltkupplung neu

## Patentansprüche

1. Verfahren zum Bestimmen des Verschleißzustandes einer Schaltkupplung (1) eines Kraftfahrzeuges, welche zum Unterbrechen des Kraftflusses bzw. Drehzahlangleich zwischen einer Abtriebswelle (2) einer Brennkraftmaschine (3) und einem Triebstrang (4) des Kraftfahrzeuges vorgesehen ist, wobei der Verschleißzustand der Schaltkupplung (1) mittels der Parameter Kupplungsausrückweg (s_{ausrück}) und Ausrückkraft (F_{ausrück}) an einem Ausrücklager (5) der Schaltkupplung (1) ermittelt wird, **dadurch gekennzeichnet, dass** hierzu eine Differenz der Kupplungsausrückwege (s_{ausrück}) bei einem ersten Anstieg (11; 12) der Ausrückkraft (F_{ausrück}) und einem durch einen zweiten Anstieg der Ausrückkraft (F_{ausrück}) bei einer Kupplungsbetätigung dargestellten Referenzpunkt (13) gemessen wird.

2. Verfahren nach Anspruch 1, **dadurch gekennzeichnet, dass** bei Fehlen des Referenzwertes (13) und/oder nach einer definierten Zeitdauer eine Messung und anschließende Speicherung des aktuellen Referenzwertes (13) eingeleitet wird.

3. Verfahren nach einem der vorhergehenden Ansprüche, **dadurch gekennzeichnet, dass** die Messung des Verschleißzustandes beim Starten der Brennkraftmaschine (3) und einer ersten Betätigung der Schaltkupplung (1) durchgeführt wird.

4. Verfahren nach einem der vorhergehenden Ansprüche, **dadurch gekennzeichnet, dass** ab Überschreiten mindestens einer definierten Grenze für die Differenz eine Warnmeldung an einen Fahrzeugführer ausgegeben wird.

5. Verfahren nach Anspruch 4, **dadurch gekennzeichnet, dass** ab Überschreiten einer ersten Grenze eine Warnmeldung mittlerer Dringlichkeit an den Fahrzeugführer ausgegeben wird, während bei Überschreiten einer zweiten Grenze eine Warnmeldung hoher Dringlichkeit erzeugt wird.

6. Verfahren nach einem der vorhergehenden Ansprüche, **dadurch gekennzeichnet, dass** die Ausrückkraft (F_{ausrück}) mit einem Druck- und/oder Kraftsensor (8) ermittelt wird.

7. Verfahren nach einem der vorhergehenden Ansprüche, **dadurch gekennzeichnet, dass** die Ausrückkraft (F_{ausrück}) über die Messung eines Druckes einer hydraulischen oder pneumatischen Ausrückeinrichtung gemessen wird.

8. Verfahren nach wenigstens einem der Ansprüche 1 bis 5, **dadurch gekennzeichnet, dass** die Ausrückkraft (F_{ausrück}) berechnet wird.

9. Anordnung zum Bestimmen des Verschleißzustandes einer Schaltkupplung (1) eines Kraftfahrzeugs, welche zum Unterbrechen des Kraftflusses bzw. Drehzahlangleich zwischen einer Abtriebswelle (2) einer Brennkraftmaschine (3) und einem Triebstrang (4) des Kraftfahrzeuges vorgesehen ist, **dadurch gekennzeichnet, dass** im Bereich eines Ausrücklagers (5) der Schaltkupplung (1) zumindest ein Druck- und/oder Kraftsensor (8) sowie ein Wegsensor (9) vorgesehen sind, welche mit einer Einrichtung zum Auswerten der von den Sensoren (8, 9) erfassten Parameter verbunden sind und in welcher Einrichtung anhand der erfassten Parameter des Druck- und/oder Kraftsensor (8) sowie des Wegsensors (9) der Verschleißzustand der Schaltkupplung (1) bestimmt wird, devart, daβ eine Differenz der Kupplungsausrüdewege bei einem ersten Anstieg der Ausrüdekraft und einem durch einen zweiten Austieg der Ausrüdekraft bei einer Kupplungsbetätigung dargestellen Referenzpunkt (13) weßbar ist.

10. Anordnung nach Anspruch 9, **dadurch gekennzeichnet, dass** die Einrichtung nach Art eines Steuergeräts (10) ausgebildet ist.

## Claims

1. Method for determining the wear state of a shift clutch (1) of a motor vehicle, which shift clutch is provided for interrupting the power flow and for rotational speed equalization between a drive output shaft (2) of an internal combustion engine (3) and a drivetrain (4) of the motor vehicle, the wear state of the shift clutch (1) being determined by means of the parameters clutch disengagement travel (s_{disengagement}) and disengagement force (F_{disengagement}) on a disengagement bearing (5) of the shift clutch (1), **characterized in that**, for this purpose, a difference is measured between the clutch disengagement travels (s_{disengagement}) during a first increase (11; 12) in the disengagement force (F_{disengagement}) and a reference point (13) formed by a second increase in the disengagement force (F_{disengagement}) during a clutch actuation.

2. Method according to Claim 1, **characterized in that**, in the absence of the reference value (13) and/or after a defined time period, a measurement and subsequent storage of the present reference value (13) is initiated.

3. Method according to one of the preceding claims, **characterized in that** the measurement of the wear state is carried out during the start-up of the internal combustion engine (3) and during a first actuation of the shift clutch (1).

4. Method according to one of the preceding claims, **characterized in that**, when at least one defined limit for the difference is exceeded, a warning signal is output to a vehicle driver.

5. Method according to Claim 4, **characterized in that**, when a first limit is exceeded, a warning signal of medium priority is output to the vehicle driver, whereas when a second limit is exceeded, a warning signal of high priority is generated.

6. Method according to one of the preceding claims, **characterized in that** the disengagement force (F_{disengagement}) is determined by means of a pressure and/or force sensor (8).

7. Method according to one of the preceding claims, **characterized in that** the disengagement force (F_{disengagement}) is measured through the measurement of a pressure of a hydraulic or pneumatic disengagement device.

8. Method according to at least one of Claims 1 to 5, **characterized in that** the disengagement force (F_{disengagement}) is calculated.

9. Arrangement for determining the wear state of a shift clutch (1) of a motor vehicle, which shift clutch is provided for interrupting the power flow and for rotational speed equalization between a drive output shaft (2) of an internal combustion engine (3) and a drivetrain (4) of the motor vehicle, **characterized in that**, in the region of a disengagement bearing (5) of the shift clutch (1), at least one pressure and/or force sensor (8) and also a travel sensor (9) are provided which are connected to a device for evaluating the parameters measured by the sensors (8, 9), in which device the wear state of the shift clutch (1) is determined on the basis of the measured parameters of the pressure and/or force sensor (8) and of the travel sensor (9) **in that** a difference can be measured between the clutch disengagement travels during a first increase in the disengagement force and a reference point (13) formed by a second increase in the disengagement force during a clutch actuation.

10. Arrangement according to Claim 9, **characterized in that** the device is designed in the form of a control unit (10).

## Revendications

1. Procédé pour déterminer l'état d'usure d'un embrayage de commutation (1) d'un véhicule automobile, qui est prévu pour interrompre le flux de forces ou l'équilibrage des vitesses de rotation entre un arbre de prise de force (2) d'un moteur à combustion interne (3) et une chaîne cinématique (4) du véhicule automobile, l'état d'usure de l'embrayage de commutation (1) étant détecté au moyen des paramètres de course de débrayage de l'embrayage (S_{ausrück}) et de force de débrayage (F_{ausrück}) au niveau d'un palier de débrayage (5) de l'embrayage à commutation (1), **caractérisé en ce que** l'on mesure pour cela une différence de courses de débrayage de l'embrayage (S_{ausrück}) pour une première augmentation (11 ; 12) de la force de débrayage (F_{ausrück}) et pour un point de référence (13) constitué par une deuxième augmentation de la force de débrayage (F_{ausrück}) dans le cas d'un actionnement de l'embrayage.

2. Procédé selon la revendication 1, **caractérisé en ce qu'**en l'absence de la valeur de référence (13), et/ou après une période de temps définie, une mesure et une mémorisation subséquente de la valeur de référence actuelle (13) sont effectuées.

3. Procédé selon l'une quelconque des revendications précédentes, **caractérisé en ce que** la mesure de l'état d'usure est effectuée au démarrage du moteur à combustion interne (3) et lors d'un premier actionnement de l'embrayage de commutation (1).

4. Procédé selon l'une quelconque des revendications précédentes, **caractérisé en ce qu'**à partir d'un dépassement d'au moins une valeur définie pour la différence, un signal d'avertissement est envoyé au conducteur du véhicule.

5. Procédé selon la revendication 4, **caractérisé en ce qu'**à partir d'un dépassement d'une première limite, un signal d'avertissement de moyenne urgence est envoyé au conducteur du véhicule, tandis qu'en cas de dépassement d'une deuxième limite, un signal d'avertissement d'extrême urgence est produit.

6. Procédé selon l'une quelconque des revendications précédentes, **caractérisé en ce que** la force de débrayage (F_{ausrück}) est déterminée à l'aide d'un capteur de pression et/ou de force (8).

7. Procédé selon l'une quelconque des revendications précédentes, **caractérisé en ce que** la force de débrayage (F_{ausrück}) est mesurée par le biais de la mesure d'une pression d'un dispositif de débrayage hydraulique ou pneumatique.

8. Procédé selon au moins l'une quelconque des revendications 1 à 5, **caractérisé en ce que** la force de débrayage (F_{ausrück}) est calculée.

9. Agencement pour déterminer l'état d'usure d'un embrayage de commutation (1) d'un véhicule automobile, qui est prévu pour interrompre le flux de forces ou l'équilibrage des vitesses de rotation entre un arbre de prise de force (2) d'un moteur à combustion interne (3) et une chaîne cinématique (4) du véhicule automobile, **caractérisé en ce que** dans la région d'un palier de débrayage (5) de l'embrayage de commutation (1) sont prévus au moins un capteur de pression et/ou de force (8) ainsi qu'un capteur de position (9), qui sont connectés à un dispositif pour analyser les paramètres détectés par les capteurs (8, 9), et dans lequel dispositif l'état d'usure de l'embrayage de commutation (1) est déterminé à l'aide des paramètres détectés par le capteur de pression et/ou de force (8) et par le capteur de position (9), de telle sorte qu'une différence entre les courses de débrayage de l'embrayage puisse être mesurée pour une première augmentation de la force de débrayage et pour un point de référence (13) constitué par une deuxième augmentation de la force de débrayage dans le cas d'un actionnement de l'embrayage.

10. Agencement selon la revendication 9, **caractérisé en ce que** le dispositif est réalisé à la manière d'un appareil de commande (10).
